# FASCICULE DE BREVET EUROPEEN

(11) **EP 1 762 749 B1**
(45) Date de publication et mention de la délivrance du brevet: **02.01.2008**
(21) Numéro de dépôt: 06118830.6
(22) Date de dépôt: 11.08.2006
(51) Int. Cl.: F16F 15/123, F16F 15/129

(54) **Embrayage à fricton, en particulier pour véhicule automobile, à rondelles élastiques perfectionnées**
Reibungskupplung, insbesondere für Kraftfahrzeug, mit verbesserten Federscheiben
Friction clutch, particularly for automobiles, with improved elastic discs

(30) Priorité: 13.09.2005 FR 0552749
(43) Date de publication de la demande: 14.03.2007
(73) Titulaire: Valeo Embrayages, 80009 Amiens Cedex 1 (FR)
(72) Inventeur: Minereau, Hugues c/o VALEO EMBRAYAGES, 93240 Stains (FR); Fafet, Olivier c/o VALEO EMBRAYAGES, 80000 Amiens (FR); Graton, Michel c/o VALEO EMBRAYAGES, 75020 Paris (FR)

(56) Documents cités:
- WO-A-95/31653
- DE-A1- 4 304 778
- FR-A- 2 854 671

## Description

La présente invention concerne un embrayage à friction, en particulier pour véhicule automobile, à rondelles élastiques perfectionnées.

Un embrayage à friction pour véhicule automobile comprend généralement un dispositif à friction destiné à transmettre un couple entre un volant moteur solidaire en rotation d'un arbre menant, formé notamment par un vilebrequin de moteur à combustion interne, et un arbre mené, formé notamment par un arbre d'entrée de boîte de vitesses.

Un embrayage à friction pour véhicule automobile comprend également des moyens d'amortissement pour lisser les irrégularités du couple transmis et filtrer les vibrations générées par le moteur à combustion interne.

Ainsi, on a déjà proposé dans l'état de la technique, notamment dans FR 2 854 671 A (FR 03 05452), des moyens d'amortissement pour dispositif à friction comprenant un amortisseur principal et un pré-amortisseur.

Ces amortisseurs sont couplés en série entre un élément rotatif d'entrée, tel qu'un disque de friction, et un élément rotatif de sortie, tel qu'un moyeu interne. Le disque de friction est destiné à être serré entre le volant moteur et un plateau de pression actionné par des moyens embrayeurs. Le moyeu interne est solidaire en rotation de l'arbre mené.

Chaque amortisseur (amortisseur principal ou pré-amortisseur) comprend généralement :
- deux rondelles de guidage solidaires en rotation entre elles,
- un voile annulaire coaxial aux rondelles de guidage et mobile en rotation par rapport aux rondelles de guidage, et
- des moyens d'amortissement munis d'organes élastiques, reliant élastiquement les rondelles de guidage et le voile, et de moyens de frottement.

Dans FR 2 854 671 A, les moyens d'amortissement de chaque amortisseur (amortisseur principal ou pré-amortisseur) se répartissent en moyens d'amortissement à activation immédiate, activés dès que débute le débattement angulaire entre les rondelles de guidage et le voile, et en moyens d'amortissement à activation décalée, activés lorsque le débattement angulaire entre les rondelles de guidage et le voile annulaire dépasse un angle seuil prédéterminé à partir d'une position de repos.

Ainsi, dans FR 2 854 671 A, les moyens d'amortissement de l'amortisseur principal et du pré-amortisseur permettent d'obtenir quatre étages d'amortissement des vibrations et irrégularités de couple.

A chaque étage d'amortissement sont associés des moyens de frottement correspondants destinés à dissiper l'énergie accumulée dans les organes élastiques. Ainsi, le pré-amortisseur comprend des premiers et deuxièmes moyens de frottement et l'amortisseur principal comprend des troisièmes et quatrièmes moyens de frottement.

Plus particulièrement, l'embrayage à friction décrit dans FR 2 854 671 A est du type comprenant des moyens d'amortissement munis de moyens de frottement comportant des première et seconde rondelles élastiques de compression axiale, sensiblement coaxiales, destinées à solliciter respectivement des première et seconde paires de surfaces de frottement complémentaires, chaque rondelle élastique comprenant une partie annulaire d'appui axial mobile prolongée radialement par des pattes radiales d'appui axial fixe, les parties annulaires des deux rondelles élastiques définissant deux surfaces d'appui axial mobile décalées radialement, la surface d'appui axial mobile de la première rondelle élastique, dite grande rondelle, entourant la surface d'appui axial mobile de la seconde rondelle élastique, dite petite rondelle.

Selon que les moyens d'amortissement sont ceux du pré-amortisseur ou de l'amortisseur principal, les première et seconde paires de surfaces de frottement complémentaires sollicitées par les première et seconde rondelles élastiques forment les deux premiers ou les deux derniers moyens de frottement des quatre étages d'amortissement.

L'embrayage à friction décrit dans FR 2 854 671 A comprend donc quatre rondelles élastiques associées respectivement aux moyens de frottement des quatre étages d'amortissement.

Habituellement, les rondelles élastiques ont une forme générale conique s'aplatissant lors de leur compression par rapprochement axial de la partie annulaire avec les extrémités libres des pattes.

On souhaite augmenter la durée de vie d'un embrayage, ce qui requiert de limiter les effets de l'usure de ses différents organes sur le fonctionnement de cet embrayage. Pour limiter les effets de cette usure, il faut en particulier autoriser un allongement plus important des rondelles élastiques de compression axiale. Pour augmenter cet allongement, il faut augmenter les dimensions radiales des rondelles élastiques de compression.

Or, les pattes radiales d'appui axial fixe de chaque rondelle élastique coopèrent avec un organe fixe axialement de l'embrayage formé, généralement, par une rondelle de guidage de l'amortisseur principal de l'embrayage.

On souhaite autant que possible ne pas augmenter les dimensions radiales des rondelles de guidage, afin de ne pas augmenter l'encombrement général de l'embrayage ou son poids. Cette contrainte s'avère contradictoire avec le souhait d'augmenter les dimensions radiales des rondelles élastiques de compression axiale.

L'invention a pour but de permettre l'augmentation des dimensions radiales des rondelles élastiques de compression sans pour autant augmenter les dimensions radiales des rondelles de guidage de l'embrayage.

A cet effet, l'invention a pour objet un embrayage à friction, en particulier pour véhicule automobile, du type précité, dont des pattes de la grande rondelle élastique sont intercalées entre des pattes de la petite rondelle élastique.

Grâce à l'intercalage de pattes des grande et petite rondelles élastiques, l'encombrement radial de l'ensemble formé par les grande et petite rondelles élastiques est relativement limité, ceci en autorisant des dimensions radiales de chaque rondelle élastique relativement importantes et en évitant d'avoir à augmenter les dimensions radiales des rondelles de guidage sur une desquelles, généralement, s'appuient les pattes des rondelles élastiques.

Suivant d'autres caractéristiques optionnelles de différents modes de réalisation de cet embrayage à friction :
- des pattes de la petite rondelle élastique s'étendent radialement vers l'extérieur de cette petite rondelle élastique ;
- des pattes de la grande rondelle élastique s'étendent radialement vers l'extérieur de cette grande rondelle élastique ;
- des pattes de la grande rondelle élastique s'étendent radialement vers l'intérieur de cette grande rondelle élastique ;
- les pattes radiales d'appui axial fixe de chaque rondelle élastique coopèrent avec un organe fixe axialement de l'embrayage formant, de préférence, une rondelle de guidage d'un amortisseur de l'embrayage ;
- l'embrayage comporte des moyens d'immobilisation en rotation d'au moins une des rondelles élastiques par rapport à l'organe fixe ;
- les moyens d'immobilisation comportent au moins un évidemment, débouchant ou non, ménagé dans l'organe fixe, coopérant avec une patte d'immobilisation en rotation prolongeant radialement la partie annulaire d'appui axial mobile de la rondelle élastique immobilisée en rotation ;
- la patte d'immobilisation en rotation forme également une patte radiale d'appui axial fixe de la rondelle élastique immobilisée en rotation ;
- la patte d'immobilisation en rotation s'étend à l'opposé radialement des pattes radiales d'appui axial fixe de la rondelle élastique immobilisée en rotation ;
- les pattes radiales d'appui axial fixe des grande et petite rondelles élastiques sont en appui respectivement sur des première et seconde surfaces de l'organe fixe décalées axialement entre elles ;
- l'une des première et seconde surfaces d'appui est délimitée par des bossages de l'organe fixe ;
- les bossages de l'organe fixe sont intercalés entre les pattes radiales d'appui axial fixe de la rondelle élastique qui n'est pas en appui axial sur ces bossages, dite rondelle basse, de façon à immobiliser en rotation cette rondelle basse ;
- l'une des première et seconde surfaces d'appui est délimitée par des enfoncements de l'organe fixe ;
- la partie annulaire d'appui axial de chaque rondelle élastique coopère avec un organe mobile axialement de l'embrayage portant, par exemple, une des surfaces de frottement ;
- l'embrayage comprend un pré-amortisseur comportant les moyens d'amortissement ;
- l'embrayage comprend un amortisseur principal, l'organe fixe formant une rondelle de guidage de cet amortisseur principal ;
- au moins une des pattes de la grande rondelle présente une dimension radiale réduite par rapport aux pattes adjacentes ;
- la patte de dimension radiale réduite est remplacée par un espacement angulaire augmenté entre les pattes adjacentes.

L'invention sera mieux comprise à la lecture de la description qui va suivre, donnée uniquement à titre d'exemple et faite en se référant aux dessins dans lesquels :
- les figures 1 à 4 sont des vues en perspective d'éléments d'un embrayage à friction selon respectivement des premier à quatrième modes de réalisation de l'invention ;
- les figures 5 et 6 sont des vues en perspective d'éléments d'un embrayage à friction selon respectivement des quatrième et cinquième modes de réalisation.

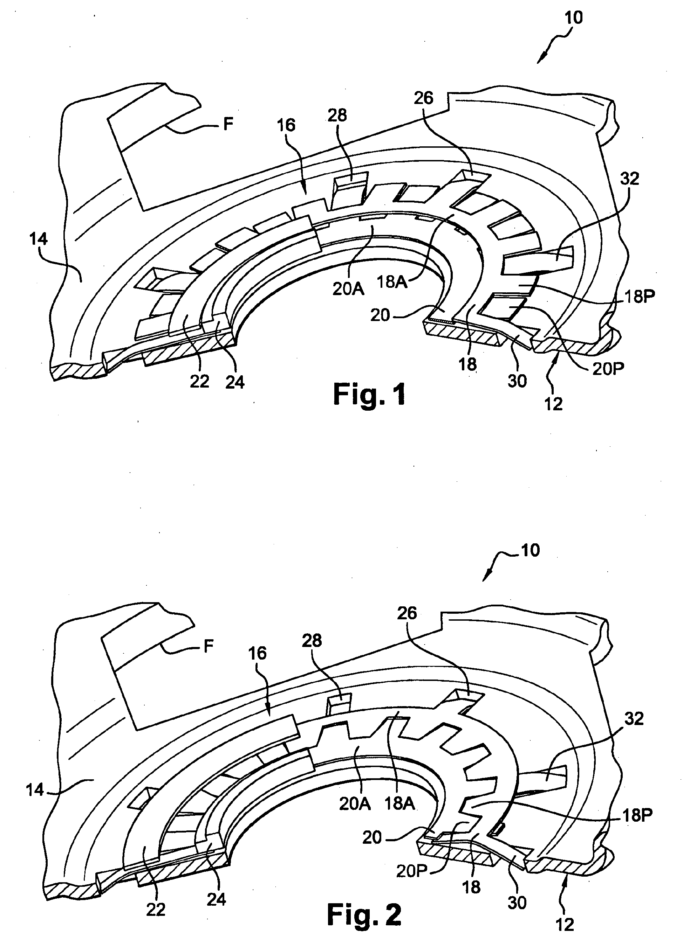

On a représenté sur la figure 1 des éléments d'un embrayage à friction 10 selon un premier mode de réalisation de l'invention, pour un véhicule automobile.

L'embrayage 10 comprend un dispositif à friction 12 comprenant des moyens d'amortissement comportant un amortisseur principal dont, on a représenté sur la figure 1 uniquement une rondelle de guidage 14, et un pré-amortisseur, dont on a représenté les éléments qui seront décrits ci-dessous.

On notera que la rondelle de guidage 14 est munie de fenêtres F destinées à recevoir des organes élastiques à action circonférentielle classiques.

Le pré-amortisseur comprend des moyens de frottement 16 comportant des première 18 et seconde 20 rondelles élastiques de compression axiale.

La rondelle de guidage 14 et les rondelles élastiques 18, 20 sont sensiblement coaxiales. Les première 18 et seconde 20 rondelles élastiques sont destinées à solliciter respectivement des première et seconde paires de surfaces de frottement complémentaires.

Une des surfaces de frottement de la première paire est portée, par exemple, par un organe annulaire 22 mobile axialement. Une des surfaces de frottement de la seconde paire est portée, par exemple, par un second organe annulaire 24 mobile axialement.

Chaque rondelle élastique 18, 20 a une forme générale conique. Plus particulièrement, on notera que chaque rondelle élastique 18, 20 comprend une partie annulaire 18A, 20A d'appui axial mobile prolongée radialement par des pattes radiales 18P, 20P d'appui axial fixe.

La partie annulaire 18A, 20A d'appui axial mobile de chaque rondelle élastique 18, 20 coopère avec les organes annulaires 22, 24 mobiles axialement.

Plus particulièrement, les parties annulaires 18A, 20A des deux rondelles élastiques 18, 20 définissent deux surfaces d'appui axial mobile en contact, respectivement, avec les organes annulaires 22, 24. Ces surfaces d'appui axial sont décalées radialement de façon que la surface d'appui axiale mobile de la première rondelle élastique 18, appelée par la suite grande rondelle, entoure la surface d'appui axiale mobile de la seconde rondelle élastique 20, appelée par la suite petite rondelle.

Les pattes radiales 18P, 20P d'appui fixe de chaque rondelle élastique 18, 20 coopèrent avec un organe fixe axialement de l'embrayage 10 qui, de préférence, est formé par la rondelle de guidage 14 de l'amortisseur principal.

Les dimensions radiales des rondelles élastiques 18, 20 sont relativement grandes.

Afin de limiter l'encombrement radial de l'ensemble comprenant les deux rondelles élastiques 18, 20, les pattes 18P de la grande rondelle élastique 18 sont intercalées angulairement entre les pattes 20P de la petite rondelle élastique 20.

On notera que les pattes radiales 20P d'appui fixe de la petite rondelle élastique 20 s'étendent radialement vers l'extérieur de cette petite rondelle élastique. Par ailleurs, dans le premier mode de réalisation de l'invention, les pattes 18P de la grande rondelle élastique 18 s'étendent radialement vers l'extérieur de cette grande rondelle élastique.

De préférence, chaque rondelle élastique 18, 20 est immobilisée en rotation par rapport à la rondelle de guidage 14 à l'aide de moyens d'immobilisation comprenant des évidements 26, 28, ménagés dans la rondelle de guidage 14, et des pattes 30, 32 d'immobilisation en rotation prolongeant radialement la partie annulaire 18A, 20A d'appui axial fixe des rondelles élastiques 18, 20. Ces pattes d'immobilisation en rotation 30, 32 coopèrent, par emboîtement, avec les évidements correspondants 26, 28. On notera que les évidements 26, 28 peuvent être débouchants, comme cela est représenté sur la figure 1, ou non.

Les évidements 26, 28 sont répartis circonférentiellement sur la rondelle de guidage 14.

Dans le premier mode de réalisation de l'invention, les pattes 30, 32 d'immobilisation en rotation forment également des pattes radiales 18P, 20P d'appui axial fixe des rondelles élastiques 18, 20.

Bien entendu, en variante, le pré-amortisseur pourrait ne comporter de moyens d'immobilisation en rotation que pour une seule des deux rondelles élastiques 18, 20. Par ailleurs, chaque rondelle élastique 18, 20 pourrait ne comporter qu'une seule patte d'immobilisation en rotation.

On décrira ci-dessous, en se référant aux figures 2 à 5, un embrayage 10 selon des deuxième à cinquième modes de réalisation. Sur ces figures 2 à 5, les éléments analogues à ceux de la figure 1 sont désignés par des références identiques.

Dans le cas du deuxième mode de réalisation de l'invention, représenté sur la figure 2, les pattes radiales 18P d'appui axial de la grande rondelle élastique 18 s'étendent radialement vers l'intérieur de cette grande rondelle élastique 18.

Par ailleurs, les pattes d'immobilisation en rotation 30 de la grande rondelle élastique 18 s'étendent à l'opposé radialement des pattes radiales 18P d'appui axial fixe de cette grande rondelle élastique 18.

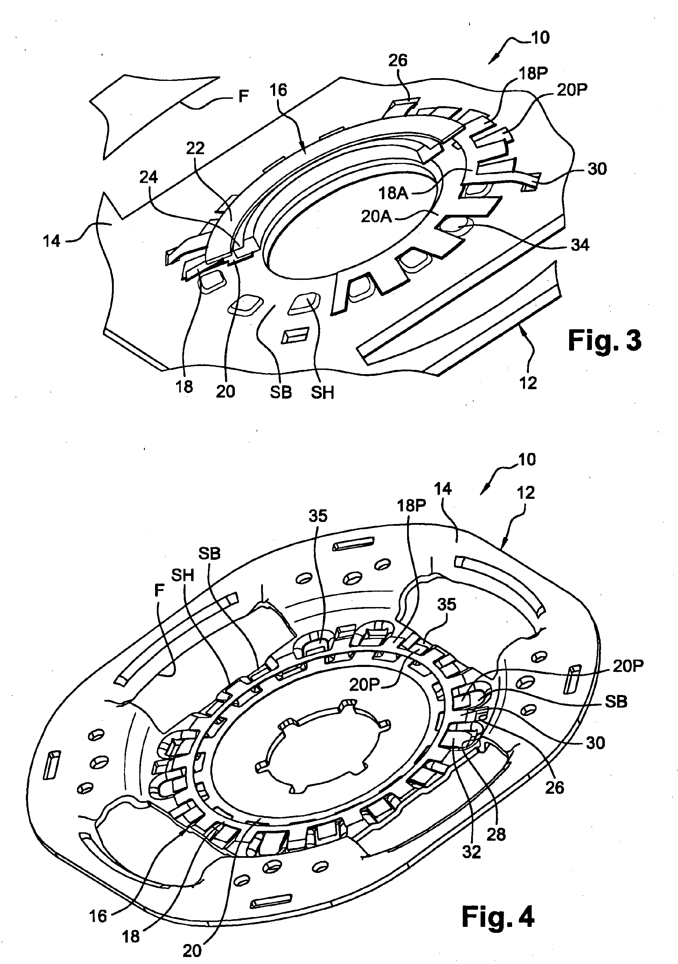

Dans les cas des troisième et quatrième modes de réalisation de l'invention, représentés sur les figures 3 et 4, les pattes radiales 18P, 20P d'appui axial fixe des grande 18 et petite 20 rondelles élastiques sont en appui respectivement sur des première SH et seconde SB surfaces d'appui ménagées sur la rondelle de guidage 14. Ces surfaces SH, SB sont décalées axialement entre elles de façon à faciliter l'intercalage des pattes des grande 18 et petite 20 rondelles élastiques.

Plus particulièrement, dans le cas du troisième mode de réalisation de l'invention, représenté sur la figure 3, la surface d'appui SH est constituée par des surfaces élémentaires délimitées par des bossages 34 ménagés, par exemple par emboutissage, sur la rondelle de guidage 14.

On notera que les bossages 34 de la rondelle de guidage 14 sont intercalés angulairement entre les pattes radiales 20P d'appui axial fixe de la petite rondelle élastique 20, c'est-à-dire de la rondelle élastique qui n'est pas en appui axial sur ces bossages 34. Ainsi, les bossages 34 forment des moyens d'immobilisation en rotation de la petite rondelle élastique 20 par coopération angulaire avec les pattes radiales 20P d'appui axial fixe de cette petite rondelle 20.

La rondelle 20 peut être appelée rondelle basse du fait qu'elle est intercalée entre la rondelle de guidage 14 et la grande rondelle élastique 18.

Dans le cas du quatrième mode de réalisation de l'invention, représenté sur la figure 4, la surface d'appui SB est constituée par des surfaces élémentaires délimitées par des enfoncements 35 ménagés, par exemple par emboutissage, dans la rondelle de guidage 14.

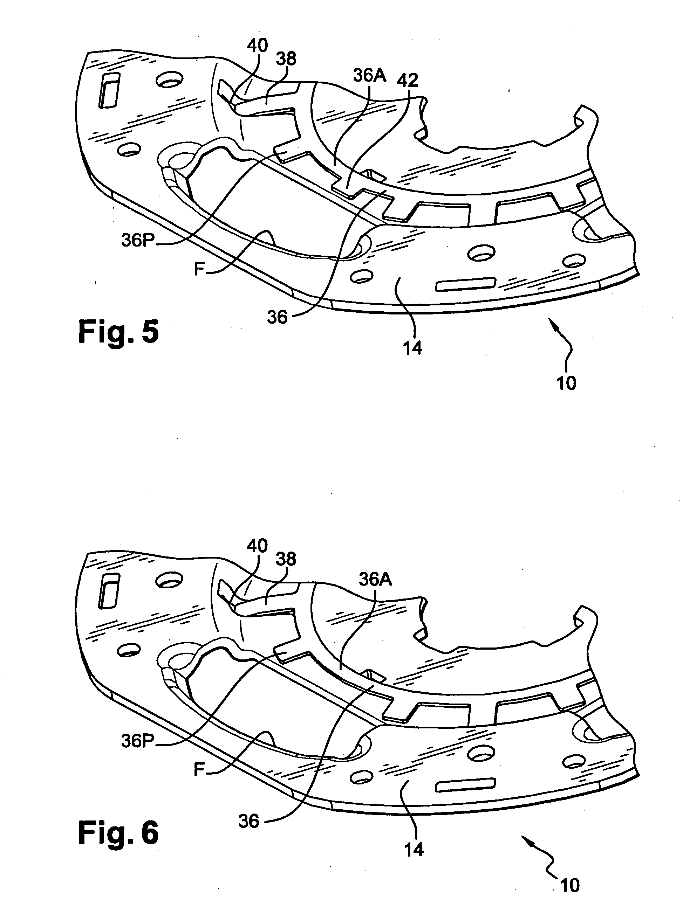

Sur les figures 5 et 6 correspondant aux cinquième et sixième modes de réalisation, on a représenté une rondelle élastique de compression axiale 36 de l'amortisseur principal.

La rondelle 36 de l'amortisseur principal a des dimensions radiales relativement grandes de façon à entourer les rondelles élastiques 18, 20 du pré-amortisseur.

La rondelle élastique 36 est munie, de façon analogue aux rondelles élastiques 18, 20, d'une partie annulaire 36A d'appui axial mobile prolongée radialement par des pattes radiales 36P d'appui axial fixe. Ces pattes 36P sont en appui sur la rondelle de guidage 14. La rondelle élastique 36 est également munie de moyens d'immobilisation en rotation analogues à ceux décrits pour les rondelles 18, 20 selon le premier mode de réalisation de l'invention. Ces moyens d'immobilisation en rotation comprennent au moins une patte d'immobilisation 38 coopérant avec un évidement complémentaire 40 ménagé dans la rondelle de guidage 14.

Toutefois, à la différence des rondelles élastiques 18, 20 décrites précédemment, chaque partie de la rondelle élastique 36 qui est relativement proche d'une fenêtre F comporte au moins une patte d'appui axial fixe 42 de dimension radiale réduite par rapport aux pattes radiales 36P d'appui axial fixe voisines, comme cela est représenté sur la figure 5.

Le cas échéant, la patte 42 de dimension radiale réduite du cinquième mode de réalisation peut être remplacée par un espacement angulaire plus important entre les pattes radiales 36P d'appui axial fixe, comme cela est représenté sur la figure 6.

## Revendications

1. Embrayage à friction (10), en particulier pour véhicule automobile, du type comprenant des moyens d'amortissement munis de moyens de frottement (16) comportant des première (18) et seconde (20) rondelles élastiques de compression axiale, sensiblement coaxiales, destinées à solliciter respectivement des première et seconde paires de surfaces de frottement complémentaires, chaque rondelle élastique (18,20) comprenant une partie annulaire (18A, 20A) d'appui axial mobile prolongée radialement par des pattes radiales (18P, 20P) d'appui axial fixe, les parties annulaires (18A, 20A) des deux rondelles élastiques (18,20) définissant deux surfaces d'appui axial mobile décalées radialement, la surface d'appui axial mobile de la première rondelle élastique (18), dite grande rondelle, entourant la surface d'appui axial mobile de la seconde rondelle élastique (20), dite petite rondelle, **caractérisé en ce que** des pattes de la grande rondelle élastique (18P) sont intercalées entre des pattes de la petite rondelle élastique (20P).

2. Embrayage à friction (10) selon la revendication 1, **caractérisé en ce que** des pattes de la petite rondelle élastique (20P) s'étendent radialement vers l'extérieur de cette petite rondelle élastique (20).

3. Embrayage à friction (10) selon la revendication 1 ou 2, **caractérisé en ce que** des pattes de la grande rondelle élastique (18P) s'étendent radialement vers l'extérieur de cette grande rondelle élastique (18).

4. Embrayage à friction (10) selon la revendication 1 ou 2, **caractérisé en ce que** des pattes de la grande rondelle élastique (18P) s'étendent radialement vers l'intérieur de cette grande rondelle élastique (18).

5. Embrayage à friction (10) selon l'une quelconque des revendications précédentes, **caractérisé en ce que** les pattes radiales (18P, 20P) d'appui axial fixe de chaque rondelle élastique (18,20) coopèrent avec un organe fixe axialement de l'embrayage (10) formant, de préférence, une rondelle de guidage (14) d'un amortisseur de l'embrayage.

6. Embrayage à friction (10) selon la revendication 5, **caractérisé en ce qu**'il comporte des moyens d'immobilisation en rotation d'au moins une des rondelles élastiques (18,20) par rapport à l'organe fixe (14).

7. Embrayage à friction (10) selon la revendication 6, **caractérisé en ce que** les moyens d'immobilisation comportent au moins un évidemment (26, 28), débouchant ou non, ménagé dans l'organe fixe (14), coopérant avec une patte d'immobilisation en rotation (30, 32) prolongeant radialement la partie annulaire (18A, 20A) d'appui axial mobile de la rondelle élastique (18,20) immobilisée en rotation.

8. Embrayage à friction (10) selon la revendication 7, **caractérisé en ce que** la patte d'immobilisation en rotation (30, 32) forme également une patte radiale (18P, 20P) d'appui axial fixe de la rondelle élastique (18,20) immobilisée en rotation.

9. Embrayage à friction (10) selon la revendication 7, **caractérisé en ce que** la patte d'immobilisation en rotation (30, 32) s'étend à l'opposé radialement des pattes radiales (18P, 20P) d'appui axial fixe de la rondelle élastique (18,20) immobilisée en rotation.

10. Embrayage à friction (10) selon l'une quelconque des revendications 5 à 9, **caractérisé en ce que** les pattes radiales (18P, 20P) d'appui axial fixe des grande (18) et petite (20) rondelles élastiques sont en appui respectivement sur des première (SH) et seconde (SB) surfaces de l'organe fixe (14) décalées axialement entre elles.

11. Embrayage à friction (10) selon la revendication 10, **caractérisé en ce que** l'une (SH) des première (SH) et seconde (SB) surfaces d'appui est délimitée par des bossages (34) de l'organe fixe.

12. Embrayage à friction (10) selon la revendication 11, **caractérisé en ce que** les bossages (34) de l'organe fixe (14) sont intercalés entre les pattes radiales (20P) d'appui axial fixe de la rondelle élastique (20) qui n'est pas en appui axial sur ces bossages (34), dite rondelle basse, de façon à immobiliser en rotation cette rondelle basse (20).

13. Embrayage à friction (10) selon la revendication 10, **caractérisé en ce que** l'une (SB) des première (SH) et seconde (SB) surfaces d'appui est délimitée par des enfoncements (35) de l'organe fixe.

14. Embrayage à friction (10) selon l'une quelconque des revendications précédentes, **caractérisé en ce que** la partie annulaire (18A, 20A) d'appui axial mobile de chaque rondelle élastique (18,20) coopère avec un organe mobile axialement (22, 24) de l'embrayage portant, par exemple, une des surfaces de frottement.

15. Embrayage à friction (10) selon l'une quelconque des revendications précédentes, **caractérisé en ce qu'**il comprend un pré-amortisseur comportant les moyens d'amortissement.

16. Embrayage à friction (10) selon les revendications 5 et 15 prises ensemble, **caractérisé en ce qu**'il comprend un amortisseur principal, l'organe fixe formant une rondelle de guidage (14) de cet amortisseur principal.

17. Embrayage à friction (10) selon l'une des revendications précédentes, **caractérisé en ce qu**'au moins une des pattes de la grande rondelle présente une dimension radiale réduite par rapport aux pattes adjacentes.

18. Embrayage à friction (10) selon la revendication 17, **caractérisé en ce que** la patte de dimension radiale réduite est remplacée par un espacement angulaire augmenté entre les pattes adjacentes.

## Claims

1. A friction clutch (10), in particular for a motor vehicle, of the type comprising damping means having friction means (16) which comprise a first elastic axial compression ring (18) and a second elastic axial compression ring (20), which are substantially coaxial with each other and which are adapted to exert a biasing force on a first pair of complementary friction surfaces and a second pair of complementary friction surfaces respectively, with each elastic ring (18, 20) comprising a movable annular axial abutment portion (18A, 20A) extended radially by radial lugs (18P, 20P) for fixed axial abutment, the annular portions (18A, 20A) of the two elastic rings (18, 20) defining two movable axial abutment surfaces which are offset radially from each other, the movable axial abutment surface of the first elastic ring (18), which is called the large ring, surrounding the movable axial abutment surface of the second elastic ring (20), which is called the small ring, **characterised in that** lugs of the large elastic ring (18P) are interposed between lugs of the small elastic ring (20P).

2. A friction clutch (10) according to Claim 1, **characterised in that** lugs of the small elastic ring (20P) extend radially outwards from the said small elastic ring (20).

3. A friction clutch (10) according to Claim 1 or Claim 2, **characterised in that** lugs of the large elastic ring (18P) extend radially outwards from the said large elastic ring (18).

4. A friction clutch (10) according to Claim 1 or Claim 2, **characterised in that** lugs of the large elastic ring (18P) extend radially inwards from the said large elastic ring (18).

5. A friction clutch (10) according to any one of the preceding Claims, **characterised in that** the fixed radial axial abutment lugs (18P, 20P) of each elastic ring (18, 20) are in cooperation with an axially fixed member of the clutch (10), which preferably forms a guide ring (14) of a damper of the clutch.

6. A friction clutch (10) according to Claim 5, **characterised in that** it includes means for preventing rotation of at least one of the elastic rings (18, 20) with respect to the fixed member (14).

7. A friction clutch (10) according to Claim 6, **characterised in that** the means for preventing rotation comprise at least one opening (26, 28), which may or may not be a through opening and which is formed in the fixed member (14), in cooperation with an anti-rotation lug (30, 32) which is a radial extension of the movable annular abutment portion (18A, 20A) of the elastic ring (18, 20) which is held against rotation.

8. A friction clutch (10) according to Claim 7, **characterised in that** the lug (30, 32) for preventing rotation also constitutes a fixed, radially extending, axial abutment lug (18P, 20P) of the elastic ring (18, 20) which is held against rotation.

9. A friction clutch (10) according to Claim 7, **characterised in that** the anti-rotation lug (30, 32) extends in the opposite radial direction from the fixed, radially extending, axial abutment lugs (18P, 20P) of the elastic ring (18, 20) which is held against rotation.

10. A friction clutch (10) according to any one of Claims 5 to 9, **characterised in that** the fixed, radially extending, axial abutment lugs (18P, 20P) of the large elastic ring (18) and small elastic ring (20) are in engagement, respectively, on a first surface (SH) and a second surface (SB), which are offset axially from each other.

11. A friction clutch (10) according to Claim 10, **characterised in that** one engagement surface (SH) selected from the first engagement surface (SH) and second engagement surface (SB) is delimited by bosses (34) of the fixed member.

12. A friction clutch (10) according to Claim 11, **characterised in that** the bosses (34) of the fixed member (14) are interposed between the fixed, radially extending, axial abutment lugs (20P) of the elastic ring (20) which is not in axial engagement on the said bosses (34), and which is called the base ring, whereby to prevent rotation of the said base ring (20).

13. A friction clutch (10) according to Claim 10, **characterised in that** one engagement surface (SH) selected from the first engagement surface (SH) and second engagement surface (SB) is delimited by recesses (35) of the fixed member.

14. A friction clutch (10) according to any one of the preceding Claims, **characterised in that** the movable annular axial abutment portion (18A, 20A) of each elastic ring (18, 20) is in cooperation with an axially movable member (22, 24) of the clutch which carries, for example, one of the friction surfaces.

15. A friction clutch (10) according to any one of the preceding Claims, **characterised in that** it includes a pre-damper which comprises the damping means.

16. A friction clutch (10) according to Claims 5 and 15 taken together, **characterised in that** it includes a main damper, with the fixed member being a guide ring (14) of the said main damper.

17. A friction clutch (10) according to one of the preceding Claims, **characterised in that** at least one of the lugs of the large ring is shorter in the radial direction than the adjacent lugs..

18. A friction clutch (10) according to Claim 17, **characterised in that** the radially short lug is replaced by an augmented angular spacing between the adjacent lugs.

## Patentansprüche

1. Reibungskupplung (10), insbesondere für Kraftfahrzeuge, umfassend Dämpfungsmittel, die mit Reibmitteln (16) ausgestattet sind, welche erste (18) und zweite (20) in etwa koaxiale elastische Scheiben für einen axialen Druck umfassen, die dazu bestimmt sind, jeweils erste und zweite komplementäre Paare von Reibflächen zu beaufschlagen,
wobei jede elastische Scheibe (18, 20) einen ringförmigen Teil (18A, 20A) für eine axial bewegliche Auflage umfasst, welcher radial durch radiale Laschen (18P, 20P) für eine axial feste Auflage verlängert ist,
wobei die ringförmigen Teile (18A, 20A) der beiden elastischen Scheiben (18, 20) zwei radial versetzte axial bewegliche Auflageflächen definieren,
und wobei die axial bewegliche Auflagefläche der ersten elastischen Scheibe (18), die als große Scheibe bezeichnet wird, die axial bewegliche Auflagefläche der zweiten elastischen Scheibe (20), die als kleine Scheibe bezeichnet wird, umgibt,
**dadurch gekennzeichnet,**
**dass** die Laschen (18P) der großen elastischen Scheibe zwischen die Laschen (20P) der kleinen elastischen Scheibe eingeschoben sind.

2. Reibungskupplung (10) nach Anspruch 1, **dadurch gekennzeichnet, dass** sich die Laschen (20P) der kleinen elastischen Scheibe radial nach außerhalb dieser kleinen elastischen Scheibe (20) erstrecken.

3. Reibungskupplung (10) nach Anspruch 1 oder 2, **dadurch gekennzeichnet, dass** sich die Laschen (18P) der großen elastischen Scheibe radial nach außerhalb dieser großen elastischen Scheibe (18) erstrecken.

4. Reibungskupplung (10) nach Anspruch 1 oder 2, **dadurch gekennzeichnet, dass** sich die Laschen (18P) der großen elastischen Scheibe radial nach innerhalb dieser großen elastischen Scheibe (18) erstrecken.

5. Reibungskupplung (10) nach einem der vorherigen Ansprüche, **dadurch gekennzeichnet, dass** die radialen Laschen (18P, 20P) für eine feste Auflage jeder elastischen Scheibe (18, 20) mit einem axial festen Organ der Kupplung (10) zusammenwirken, welches vorzugsweise eine Führungsscheibe (14) eines Dämpfers der Kupplung bildet.

6. Reibungskupplung (10) nach Anspruch 5, **dadurch gekennzeichnet, dass** sie Mittel für eine rotatorische Fixierung mindestens einer elastischen Scheibe (18, 20) relativ zum festen Organ (14) aufweist.

7. Reibungskupplung (10) nach Anspruch 6, **dadurch gekennzeichnet, dass** die Mittel zur Fixierung mindestens eine offen oder nicht offen in das feste Organ (14) eingebrachte Ausnehmung (26, 28) umfassen, die mit einer Lasche (30, 32) zur rotatorischen Fixierung zusammenwirkt, welche den ringförmigen Teil (18A, 20A) für die axial bewegliche Auflage der rotatorisch fixierten elastischen Scheibe (18, 20) radial verlängert.

8. Reibungskupplung (10) nach Anspruch 7, **dadurch gekennzeichnet, dass** die Lasche (30, 32) zur rotatorischen Fixierung außerdem eine radiale Lasche (18P, 20P) für die axial feste Auflage der rotatorisch fixierten elastischen Scheibe (18, 20) bildet.

9. Reibungskupplung (10) nach Anspruch 7, **dadurch gekennzeichnet, dass** die Lasche (30, 32) zur rotatorischen Fixierung sich radial entgegengesetzt zu den radialen Laschen (18P, 20P) für die axial feste Auflage der rotatorisch fixierten elastischen Scheibe (18, 20) erstreckt.

10. Reibungskupplung (10) nach einem der Ansprüche 5 bis 9, **dadurch gekennzeichnet , dass** die radialen Laschen (18P, 20P) für die axial feste Auflage der großen (18) und kleinen (20) elastischen Scheibe jeweils auf ersten (SH) und zweiten (SB) Oberflächen des festen Organs (14) aufliegen, welche axial zueinander versetzt sind.

11. Reibungskupplung (10) nach Anspruch 10, **dadurch gekennzeichnet, dass** eine (SH) der ersten (SH) und zweiten (SB) Auflageflächen durch Vorsprünge (34) des festen Organs begrenzt ist.

12. Reibungskupplung (10) nach Anspruch 11, **dadurch gekennzeichnet, dass** die Vorsprünge (34) des festen Organs (14) zwischen den radialen Laschen (20P) zur axial feste Auflage der elastischen Scheibe (20) eingeschoben sind, welche als tiefliegende Scheibe bezeichnet wird und nicht in axialer Auflage auf diesen Vorsprüngen (34) ist, um diese tiefliegende Scheibe (20) rotatorisch zu fixieren.

13. Reibungskupplung (10) nach Anspruch 10, **dadurch gekennzeichnet, dass** eine (SB) der ersten (SH) und zweiten (SB) Auflageflächen durch Vertiefungen (35) des festen Organs begrenzt ist.

14. Reibungskupplung (10) nach einem der vorherigen Ansprüche, **dadurch gekennzeichnet , dass** der ringförmige Teil (18A, 20A) für die axial bewegliche Auflage jeder elastischen Scheibe (18, 20) mit einem axial beweglichen Organ (22, 24) der Kupplung zusammenwirkt, welches beispielsweise eine der Reibflächen trägt.

15. Reibungskupplung (10) nach einem der vorherigen Ansprüche, **dadurch gekennzeichnet , dass** sie einen Vordämpfer aufweist, welcher die Dämpfungsmittel umfasst.

16. Reibungskupplung (10) nach Anspruch 5 in Kombination mit Anspruch 15, **dadurch gekennzeichnet , dass** sie einen Hauptdämpfer aufweist, wobei das feste Organ eine Führungsscheibe (14) dieses Hauptdämpfers bildet.

17. Reibungskupplung (10) nach einem der vorherigen Ansprüche, **dadurch gekennzeichnet , dass** mindestens eine der Laschen der großen Scheibe eine radial reduzierte Abmessung gegenüber den benachbarten Laschen aufweist.

18. Reibungskupplung (10) nach Anspruch 17, **dadurch gekennzeichnet, dass** die Lasche mit radial reduzierter Abmessung durch einen vergrößerten winkelmäßigen Abstand zwischen den benachbarten Laschen ersetzt ist.
